# EUROPEAN PATENT APPLICATION

(11) **EP 1 814 332 A1**
(43) Date of publication of application: **01.08.2007**
(21) Application number: 07100399.0
(22) Date of filing: 11.01.2007
(51) Int. Cl.: H04N 7/24

(54) **DMB system and method for downloading BIFS stream and DMB terminal**

(30) Priority: 25.01.2006 KR 20060008002
(71) Applicant: Samsung Electronics Co., Ltd., Suwon-si, Gyeonggi-Do (KR)
(72) Inventor: Park, Joon-Ho, Yeongtong-gu Suwon-si Gyeonggi-do (KR); Han, Young-Seop, Yeongtong-gu Suwon-si Gyeonggi-do (KR); Kim, Young-Jip, Yeongtong-gu Suwon-si Gyeonggi-do (KR)
(74) Representative: Grünecker, Kinkeldey, Stockmair & Schwanhäusser Anwaltssozietät

(57) **Abstract**

A DMB (Digital Multimedia Broadcasting) system and a method for redownloading an erroneous BIFS (Binary Format for Scene) stream received by a DMB terminal in a terrestrial DMB system, as well as a DMB terminal. The method includes determining whether an error has occurred in a BIFS object contained in a transmission stream when a DMB terminal receives the transmission stream from a DMB broadcasting station; transmitting a message for requesting re-download of the erroneous BIFS object to a BIFS server via a mobile communication network when it is determined that an error has occurred in the BIFS object; transmitting a BIFS object when the BIFS server receives a message for requesting download of the BIFS object; and storing the BIFS object when the DMB terminal receives the BIFS object from the BIFS server.

## Description

The present invention relates to a Digital Multimedia Broadcasting (hereinafter, referred to as DMB) system. More particularly, the present invention relates to a DMB system and a method for re-downloading an erroneous Binary Format for Scene (hereinafter, referred to as BIFS) stream, which has been received by a DMB terminal in a terrestrial DMB system, as well as a DMB terminal. BIFS is an abbreviation for "Blnary Format for Scenes". BIFS provides a complete framework for the presentation engine of MPEG-4 terminals. BIFS enables to mix various MPEG-4 media together with 2D and 3D graphics, handle interactivity, and deal with the local or remote changes of the scene over time.

As generally known in the art, DMB services have been developed to replace conventional analog broadcasting services and provide users with better video and audio services. DMB services are classified into a satellite DMB service and a terrestrial DMB service. The terrestrial DMB service is based on a DAB (Digital Audio Broadcasting) system, particularly Eureka-147, which is a European digital radio broadcasting standard for providing both high-quality (i.e., CD-grade) audio services and data services. The terrestrial DMB has been developed to provide multimedia broadcasting services, including video services.

Compared with conventional digital broadcasting services, such as ATSC (Advanced Television Systems Committee) and DVB (Digital Video Broadcasting), the terrestrial DMB service has an advantage in that it enables subscribers on the move (i.e., mobile subscribers) to watch broadcasts. Particularly, a subscriber of the terrestrial DMB service can watch broadcasts from a DMB receiver terminal regardless of location.

The terrestrial DMB service has another advantage in that subscribers are provided with video services and audio and data services. Accordingly, more channels and services are available from the terrestrial DMB service, compared with stationary terrestrial digital broadcasting.

In the case of conventional terrestrial DMB services, DMB broadcasting stations transmit stream-type broadcasting signals and digital multimedia broadcasting signals based on MPEG-4 (Motion Picture Experts Group-4) BIFS. As used herein, MPEG-4 BIFS refers to a screen description based on MPEG-4. In addition to audio/video streams, MPEG-4 BIFS is provided as auxiliary data by terrestrial DMB services. According to MPEG-4 BIFS, objects are combined so as to compose a screen. Among BIFS nodes, those responding to user input are supported so that users are provided with an interactive environment, i.e., they can click menus and buttons while watching contents.

In general, MPEG-4 refers to a digital bit stream protocol for encoding audio, video, and composite objects. Particularly, MPEG-4 provides a basis for digitally expressing and transmitting various multimedia contents. Since MPEG-4 is an object-based expression system, it requires scene description information for composing each screen.

The screen description information is referred to as BIFS. More particularly, BIFS is an MPEG-4 scene description protocol and is used to compose MPEG-4 objects, describe an interface with the MPEG-4 objects, and move the MPEG-4 objects so that the MPEG-4 objects are composed and mixed for interaction. Therefore, digital multimedia broadcast receiver terminals, which are adapted to receive digital multimedia broadcast data based on MPEG-4 BIFS, receive objects composing digital multimedia broadcast contents. Then, the terminals compose the objects based on BIFS and provide users with the composed objects.

In the case of current terrestrial DMB services, BIFS streams can be received only via broadcasting networks. Objects used in BIFS services are given limited time and bandwidth. Furthermore, unidirectional transmission characteristics of broadcasting media make it impossible to correct reception errors. As a result, errors occur in the scene display.

The limited bandwidth of BIFS services of terrestrial DMB makes it impossible to provide additional services by using various objects.

As such, conventional DMB systems have a problem in that, when a poor terrestrial environment causes an error to a BIFS stream received by a DMB terminal, it is difficult to properly compose scenes for DMB services, due to the absence of a mechanism for controlling BIFS errors and re-transmission. In addition, it is impossible to provide various multimedia services, because BIFS streams are transmitted in a limited bandwidth in the case of terrestrial DMB services.

Accordingly, the present invention has been made to solve the above-mentioned problems occurring in the prior art. It is the object of the present invention to provide a DMB system and a method for re-downloading an erroneous BIFS stream, which has been received by a DMB terminal, from a BIFS server via a mobile communication network, which has a channel environment better than a terrestrial DMB environment, as well as a DMB terminal.

This object is solved by the subject matter of the independent claims.

Preferred embodiments are defined in the dependent claims.

In order to accomplish the above, according to an aspect of the present invention, there is provided a DMB system for downloading a BIFS stream, including a BIFS server for providing a DMB broadcasting station with BIFS contents and, when a message for requesting download of a BIFS object is received, transmitting the BIFS object; a DMB broadcasting station for transmitting a transmission stream containing the BIFS object; and a DMB terminal for receiving the transmission steam from the DMB broadcasting station and confirming if an error has occurred in the BIFS object contained in the transmission stream, the DMB terminal transmitting a message for requesting re-download of the BIFS object to the BIFS server via a mobile communication network when an error has occurred in the BIFS object and, when it is determined that the BIFS object is received from the BIFS server, storing the BIFS object.

In accordance with another aspect of the present invention, there is provided a DMB terminal for downloading a BIFS stream, including a DMB receiver unit for receiving a transmission stream and a control unit for confirming if an error has occurred in a BIFS object contained in the transmission stream and, when an error has occurred in the BIFS object, transmitting a message for requesting re-download of the BIFS object, to a BIFS server via a mobile communication network, the control unit storing the BIFS object when the BIFS object is received from the BIFS server.

In accordance with another aspect of the present invention, there is provided a method for downloading a BIFS object in a DMB system having a BIFS server for providing BIFS contents to a DMB broadcasting station for transmitting a transmission stream containing the BIFS object, the method including confirming if an error has occurred in the BIFS object contained in the transmission stream when the DMB terminal receives the transmission stream from the DMB broadcasting station; transmitting a message for requesting re-download of the BIFS object, to the BIFS server via a mobile communication network when an error has occurred in the BIFS object; transmitting a BIFS object when the BIFS server receives a message for requesting download of the BIFS object; and storing the BIFS object when the DMB terminal receives the BIFS object from the BIFS server.

The present invention will be more apparent from the following detailed description taken in conjunction with the accompanying drawings, in which:
FIG. 1 is a block diagram illustrating the construction of a terrestrial DMB system for providing BIFS streams according to the present invention;
FIG. 2 is a block diagram the internal construction of a DMB terminal according to the present invention;
FIG. 3 is a flow diagram illustrating signals transmitted to, or received from, a BIFS server, a DMB broadcasting station, and a DMB terminal for downloading BIFS streams in a terrestrial DMB system according to the present invention;
FIG. 4 is a flowchart illustrating a process for downloading BIFS streams by a DMB terminal according to the present invention; and
FIG. 5 is a graph illustrating an example of BIFS ID for requesting download of BIFS streams according to the present invention.

Hereinafter, preferred embodiments of the present invention will be described with reference to the accompanying drawings. In the following description of the present invention, a detailed description of known functions and configurations incorporated herein is omitted to avoid making the subject matter of the present invention unclear.

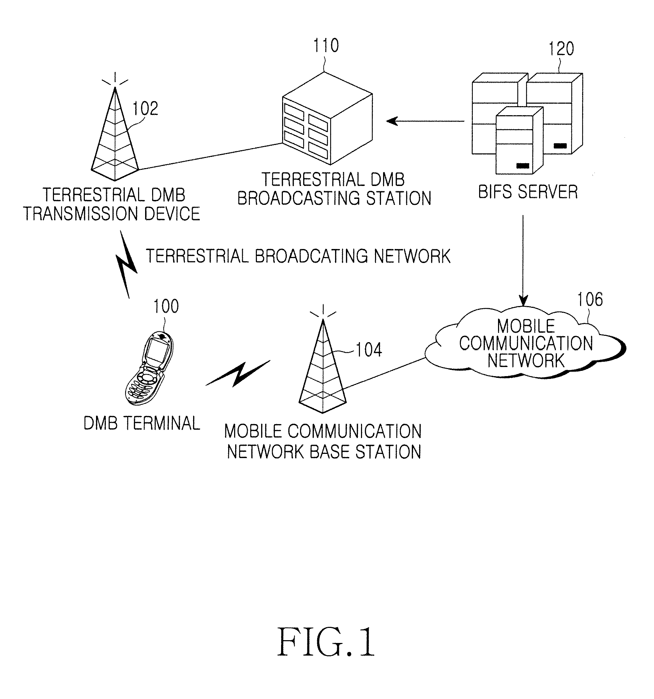

The construction of a system for re-downloading an erroneous BIFS stream received by a DMB terminal from a BIFS server via mobile communication network according to the present invention will now be described with reference to FIG. 1. It is assumed in the following description that a DMB terminal 402 is capable of receiving terrestrial DMB signals provided with a terrestrial DMB service. FIG. 1 is a block diagram illustrating the construction of a terrestrial DMB system for providing BIFS streams according to the present invention.

With reference to FIG. 1, BIFS server 120 provides BIFS contents to a terrestrial DMB broadcasting station 110. The terrestrial DMB broadcasting station 110 transmits broadcast data for video, audio, and data services, which are provided by a number of service providers, as broadcasting services via a terrestrial DMB transmission device 102 and a terrestrial public network.

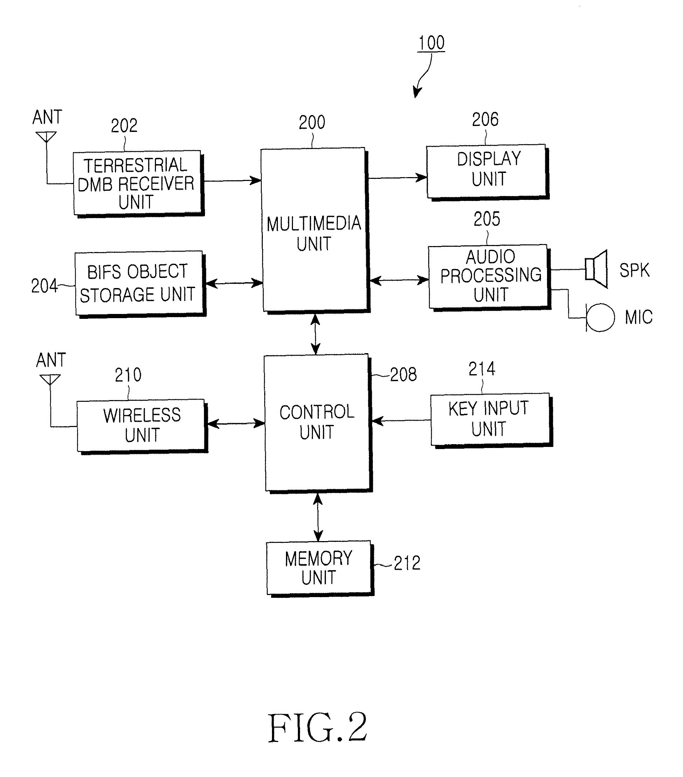

A DMB terminal 100 receives a transmission stream (TS) from the terrestrial DMB broadcasting station 110 and composes a screen by using a BIFS stream, which is contained in the transmission stream, for screen display. The internal construction of the DMB terminal 100 will be described with reference to FIG. 2, which is a block diagram illustrating the internal construction of a DMB terminal according to the present invention.

With reference to FIG. 2, the DMB terminal 100 includes a terrestrial DMB receiver unit 202, a multimedia unit 200, a BIFS object storage unit 204, a display unit 206, a control unit 208, a key input unit 214, a memory unit 212, and a wireless unit 210.

The control unit 208 controls the overall operation of the DMB terminal 100. The control unit 208 parses broadcast data, which has been received from the terrestrial DMB receiver unit 202, into video, audio, and BIFS streams via the multimedia unit 200 and, based on screen composition information of the BIFS stream, controls the display unit 206 and a speaker so as to output corresponding video and audio data. Particularly, when an error has occurred in the BIFS stream, the control unit 208 generates a BIFS stream request message for re-downloading the erroneous BIFS stream and transmits the request message to the BIFS server 120 via the wireless unit 210.

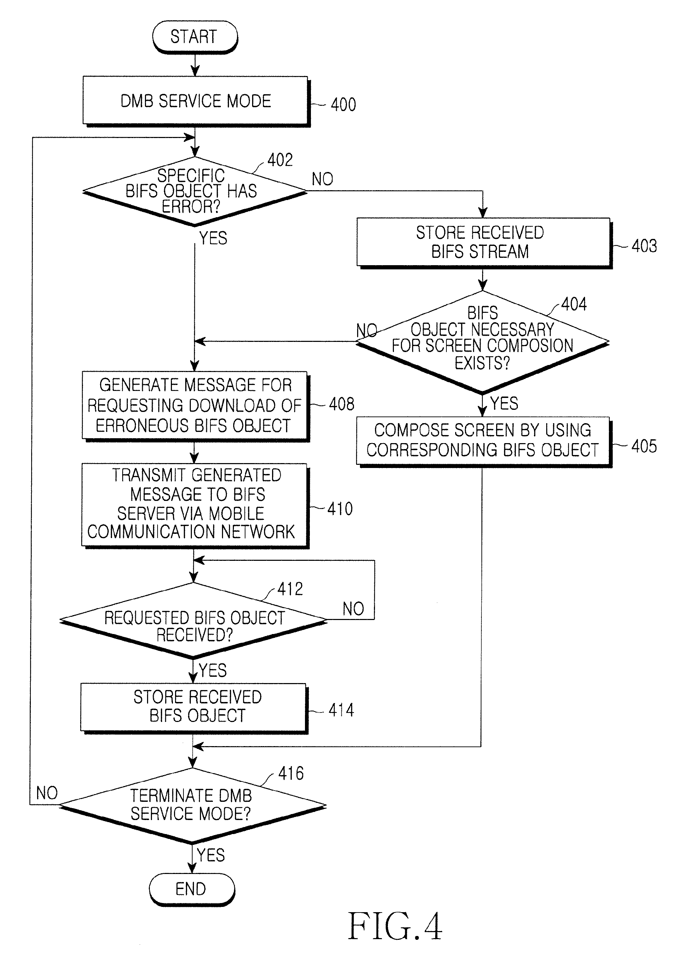

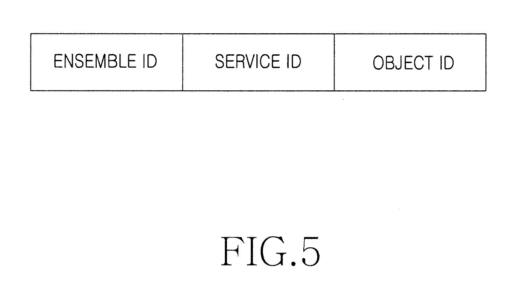

FIG. 5 is a graph illustrating an example of BIFS ID for requesting download of BIFS streams according to the present invention. The BIFS stream request message contains information regarding an ensemble ID, a service ID, and an object ID. The BIFS stream request message is transmitted to the BIFS server 120 via a mobile communication network in an SMS (Short Message Service) mode. When the requested BIFS stream is received from the BIFS server 120, the control unit 208 controls the BIFS object storage unit 204 so as to store the received BIFS stream. The detailed operation of the control unit 208 will be described below with reference to a flow chart shown in FIG. 4.

The terrestrial DMB receiver unit 202 receives a transmission stream via an antenna, and, after demultiplexing the transmission stream, parses the received transmission stream into video, audio, and BIFS streams through a decoding process. The multimedia unit 200 outputs the video and audio streams, which are transmitted via the terrestrial DMB receiver unit 202, to the display unit 206 and an audio processing unit 205, respectively, by using screen composition information of the BIFS stream. The multimedia unit 200 may include a CODEC (CODER/DECODER - not shown).

The control unit 208 receives display data regarding key input data from the key input unit 214 and displays the display data using the display unit 206 operating under the control of the control unit 208. When a user sets or drives a necessary function, the control unit 208 visually informs the user of a corresponding state. The audio processing unit 205, which is connected to a microphone (MIC) and a speaker (SPK), converts audio signals transmitted from the multimedia unit 200 and outputs them via the speaker SPK. In addition, the audio processing unit 205 converts audio signals from the microphone MIC into data and transmits the data to the multimedia unit 200. The BIFS object storage unit 204 stores BIFS streams outputted from the multimedia unit 200 and, under the control of the control unit 208, provides the multimedia unit 200 with a corresponding BIFS object at a request for a BIFS object for screen composition. The key input 214 provides interface with the user and, when a key is operated, outputs corresponding key input data. The key input data outputted from the key input unit 214 is transferred to the control unit 208, which specifies the key corresponding to the key input data. Based on the result of specification, the control unit 208 performs one or more necessary operations. The memory unit 212 stores information related to broadcasting services, as well as information related to overall functions of the DMB terminal 100.

When a BIFS stream received by the terrestrial DMB terminal 100, constructed as shown in FIG. 2, contains an error or when the stream is aimed for an additional service not suitable for transmission via a terrestrial broadcasting network, the DMB terminal 100 transmits a message for downloading a desired BIFS stream to the BIFS server 120 via mobile communication base station 104 and a mobile communication network 106, respectively.

When the BIFS server 120 receives the BIFS stream request message from the DMB terminal 100, it identifies a BIFS stream corresponding to an ensemble ID, a service ID, an object ID, which are contained in the message, and transmits the BIFS stream to the terrestrial DMB terminal 100.

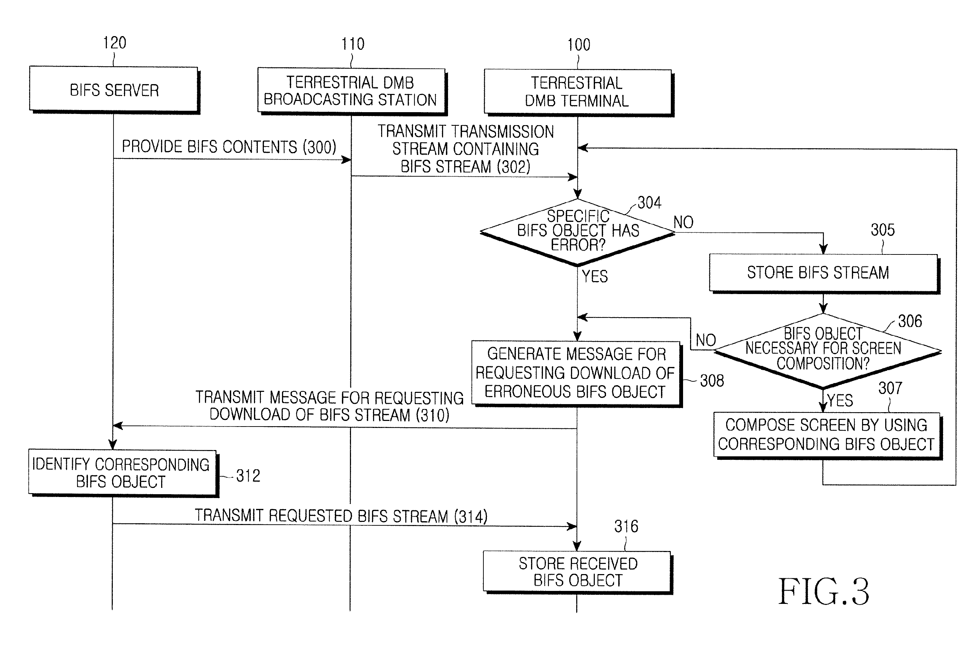

Steps for transmitting a message for requesting download of a specific BIFS stream to the BIFS server 120 and downloading the requested BIFS stream by a DMB terminal 100 in a system for downloading BIFS streams, which is constructed as shown in FIG. 1, will now be described with reference to FIG. 3 which is a flow diagram illustrating signals transmitted to, or received from, a BIFS server, a DMB broadcasting station, and a DMB terminal for downloading BIFS streams in a terrestrial DMB system according to the present invention.

Referring to FIG. 2, in step 300, the BIFS server 120 provides BIFS contents to the DMB broadcasting station 110. Upon receiving the BIFS contents, the DMB broadcasting station 110 generates a transmission stream including video, audio, and BIFS streams, in order to transmit the BIFS contents to the terrestrial DMB terminal 100, and transmits the generated transmission stream to the terrestrial DMB terminal 100 in step 302.

Upon receiving the transmission stream, the terrestrial DMB terminal 100 parses the transmission stream into video, audio, and BIFS streams and, in step 304, subjects a PES (Packetized Elementary Stream), which constitutes the received BIFS object, to a CRC test for the purpose of confirming whether the BIFS stream contains an error.

If it is determined in step 304 that the BIFS stream contains an error, the terrestrial DMB terminal 100 proceeds to step 308. If not, the terrestrial DMB terminal proceeds to step 305 and stores necessary BIFS streams in the BIFS object storage unit 204. In step 306, the terrestrial DMB terminal 100 determines whether a BIFS object necessary for screen composition during broadcasting services is stored in the BIFS object storage unit 204. If it is determined that the necessary BIFS object exists, the terrestrial DMB terminal 100 composes the screen by using the BIFS object and proceeds to step 307. If not, the terrestrial DMB terminal 100 proceeds to step 308, wherein it transmits a message for requesting download of the necessary BIFS via the mobile communication network and downloads the necessary BIFS stream. The absence of the BIFS object necessary for screen composition corresponds to a case, for example, of a BIFS object for an additional service, which is not transmitted via a broadcasting network. Particularly, such a BIFS object for an additional service is not transmitted to all DMB terminals via the broadcasting network, but is transmitted to terminals of limited subscribers (i.e., multicast), who have subscribed to the additional service via the BIFS server, after an authentication process of the BIFS server.

When the terrestrial DMB terminal 100 proceeds to step 308 after determining an error is present in the BIFS stream in step 304, the DMB terminal 100 generates a request message for downloading the erroneous BIFS stream. The BIFS stream download request message contains an ensemble ID, a service ID, and an object ID, as has been described with reference to FIG. 2. The BIFS stream download request message may be generated in an SMS mode.

The terrestrial DMB terminal 100 transmits the BIFS object download request message generated in the step 308 to the BIFS server 120 via the mobile communication network.

Upon receiving the BIFS object download request message, the BIFS server 120 identifies the BIFS object based on the ensemble ID, the service ID, and the object ID contained in the message. The BIFS server 120 transmits the identified BIFS to the terrestrial DMB terminal 100 while it is contained in a BIFS stream. The terrestrial DMB terminal 136 receives the BIFS stream and stores it in the BIFS object storage unit 204. The terrestrial DMB terminal 136 is now able to compose a broadcast screen by using the received BIFS stream and displays the composed broadcast screen.

When an error has occurred in the BIFS stream received by the terrestrial DMB terminal 100, which is constructed as shown in FIG. 2, via the broadcasting network, the DMB terminal 100 accesses the BIFS server 120 via the mobile communication network, requests download of the erroneous BIFS object, and downloads it in a series of steps, which will now be described with reference to FIG. 4. It is assumed in the following description that the terrestrial DMB terminal 100 is in a DMB service mode in step 400.

In step 402, the control unit 208 demultiplexes the transmission stream, which has been received via the terrestrial DMB receiver unit 202, into audio, video, and BIFS streams through the multimedia unit 200. The control unit 208 checks if an error has occurred in any of at least one BIFS object contained in the BIFS stream. If an error has been detected in a BIFS object, the control unit 208 proceeds to step 408. If not, the control unit 208 proceeds to step 403 and stores the received BIFS stream in the BIFS object storage unit 204. After proceeding to step 404, the control unit 208 searches for a BIFS object necessary for composing the current broadcasting screen. If the necessary BIFS object exists, the control unit 208 proceeds to step 405 and composes the screen by using the BIFS object. If not, the control unit 208 proceeds to step 408.

After proceeding to step 408 from steps 402 or 404, the control unit 208 generates a request message for downloading the erroneous BIFS object. The message is then transmitted to the BIFS server 120 via the mobile communication network.

The control unit 208 proceeds to step 412 and checks if a BIFS stream, which contains the requested BIFS object, is received from the BIFS server 120. If the BIFS object is received via the wireless unit 210, the control unit 208 stores the received BIFS object in the BIFS object unit 204 and uses the received BIFS object so as to compose the corresponding screen in step 414. After proceeding to step 416 from step 414, the control unit 208 monitors a request for terminating the DMB service mode. If the request is received, the control unit 208 terminates the mode and, if not, proceeds to step 402.

In summary, according to the present invention, when a terrestrial DMB terminal receives an erroneous BIFS stream, it generates a message for requesting download of the erroneous BIFS object and transmits the message to a BIFS server via a mobile communication network, so that the requested BIFS object is downloaded via the mobile communication network.

As mentioned above, the present invention is advantageous in that, when a DMB terminal cannot properly receive a desired BIFS service due to channel error, for example, resulting from a poor terrestrial DMB reception environment, the DMB terminal can access a BIFS server via a mobile communication network, which has a channel environment better than the terrestrial environment, and receive the erroneous BIFS object so that the service is maintained without interruption. In the case of a BITS service of terrestrial DMB, the limited bandwidth makes it impossible to provide additional services by using various objects. In contrast, the present invention can provide additional services by downloading BIFS objects to DMB terminals via a mobile communication network.

While the invention has been shown and described with reference to certain preferred embodiments thereof, it will be understood by those skilled in the art that various changes in form and details may be made therein without departing from the scope of the invention as defined by the appended claims.

## Claims

1. A DMB, Digital Multimedia Broadcasting, system for downloading a BIFS, Binary Format for Scene, stream, comprising:
a BIFS server for providing a DMB broadcasting station with BIFS contents and, when a message for requesting download of a BIFS object is received, transmitting the BIFS object;
a DMB broadcasting station for transmitting a transmission stream containing the BIFS object; and
a DMB terminal for:
receiving the transmission steam from the DMB broadcasting station;
determining whether an error has occurred in the BIFS object contained in the transmission stream;
transmitting a message for requesting re-download of the BIFS objectto the BIFS server via a mobile communication network when it is determined that an error has occurred in the BIFS object; and
storing the BIFS object when the BIFS object is received from the BIFS server.

2. The DMB system as claimed in claim 1, wherein the message for requesting re-download of the BIFS object contains at least one of an ensemble ID field, a service ID field, and an object ID field.

3. The DMB system as claimed in claim 1 or 2, wherein the DMB terminal is adapted to store the BIFS object contained in the transmission stream when it is determined that an error has not occurred in the BIFS object.

4. The DMB system as claimed in one of claims 1 to 3, wherein the DMB terminal is adapted to generate a message for requesting download of a BIFS object necessary for screen composition, when the BIFS object is not stored, and transmit the message to the BIFS server via the mobile communication network.

5. A DMB, Digital Multimedia Broadcasting, terminal for downloading a BIFS stream, comprising:
a DMB receiver unit for receiving a transmission stream and
a control unit for:
determining whether an error has occurred in a BIFS object contained in the transmission stream;
transmitting a message for requesting re-download of the BIFS object to a BIFS server via a mobile communication network when it is determined that an error has occurred in the BIFS object; and
storing the BIFS object when the BIFS object is received from the BIFS server.

6. The DMB terminal as claimed in claim 5, further comprising a BIFS storage unit for storing the BIFS object received from the BIFS server.

7. The DMB terminal as claimed in claim 5 or 6, wherein the message for requesting re-download of the BIFS object contains at least one of an ensemble ID field, a service ID field, an object ID field.

8. The DMB terminal as claimed in claim 6, wherein the control unit is adapted to store the BIFS object in the BIFS storage unit, the BIFS object being contained in the transmission stream, when it is determined that an error has not occurred in the BIFS object.

9. The DMB terminal as claimed in one of claims 5 to 8, wherein the control unit: generates a message for requesting download of the BIFS object necessary for screen composition, when the BIFS object is not stored; and
transmits the message for requesting download of the BIFS object to the BI FS server via the mobile communication network.

10. A method for downloading a BIFS, Binary Format for Scene, object in a DMB, Digital Multimedia Broadcasting, system having a BIFS server for providing BIFS contents to a DMB broadcasting station for transmitting a transmission stream containing the BIFS object, the method comprising:
determining whether an error has occurred in the BIFS object contained in the transmission stream when the DMB terminal receives the transmission stream from the DMB broadcasting station;
transmitting a message for requesting re-download of the BIFS object to the BIFS server via a mobile communication network when it is determined that an error has occurred in the BIFS object;
transmitting a BIFS object when the BIFS server receives a message for requesting download of the BIFS object; and
storing the BIFS object when the DMB terminal receives the BIFS object from the BIFS server.

11. The method as claimed in claim 10, wherein the message for requesting re-download of a BIFS object contains at least one of an ensemble ID field, a service ID field, and an object ID field.

12. The method as claimed in claim 10 or 11, further comprising storing the BIFS object contained in the transmission stream, when it is determined that an error has not occurred in the BIFS object, by the DMB terminal.

13. The method as claimed in one of claims 10 to 12, further comprising:
generating a message for requesting download of the BIFS object necessary for screen composition, when the BIFS object is not stored; and
transmitting the message for requesting download of the BIFS object to the BIFS server via the mobile communication network by the DMB terminal.
